# EUROPEAN PATENT SPECIFICATION

(11) **EP 0 467 654 B1**
(45) Date of publication and mention of the grant of the patent: **02.11.1995**
(21) Application number: 91306469.7
(22) Date of filing: 16.07.1991
(51) Int. Cl.: E21B 33/13, C04B 28/02, C04B 28/04

(54) **Process for cementing oil and gas wells**
Verfahren zum Zementieren von Öl- und Gasbohrlöchern
Procédé pour la cimentation de puits de pétrôle et de gaz

(30) Priority: 20.07.1990 US 556011
(43) Date of publication of application: 22.01.1992
(73) Proprietor: ATLANTIC RICHFIELD COMPANY, Los Angeles California 90071 (US)
(72) Inventor: Bloys, James B., Plano, Texas 75023 (US); Wilson, William N., Plano, Texas 75075 (US); Bradshaw, Roger D., Allen, Texas 75002 (US)
(74) Representative: Cropp, John Anthony David

(56) References cited:
- EP-A- 0 320 288
- US-A- 3 689 295
- US-A- 4 351 671
- US-A- 4 953 620
- US-A- 4 976 316

## Description

This invention relates to a method of cementing a well bore which extends into an earth formation using a cement composition formed by modifying drilling fluid.

There is an incentive to form the cement composition from drilling fluid because this resolves at least in part the problems relating to the disposal of drilling fluid, and reduces both cement slurry preparation time and the need to maintain clearly the separation between drilling mud and cementitious slurry.

U.S. Patents 3,168,139, 3,499,491, 3,557,876, 3,887,009 and 4,176,722 disclose well cement compositions which have been formed, at least in part, by well drilling fluids.

Many prior art efforts to convert drilling fluid to cement material have posed problems in causing increased viscosity and flocculation and slow setting of the cement. EP-A-0320288, describes in greater detail the problems frequently encountered.

To be suitable for use as a cement composition for cementing oil and gas wells, the composition is desired to have a density similar to that of the drilling fluid, a suitably low viscosity and in particular to be substantially free from flocculation which tends to cause an unacceptable increase in viscosity, to set within a reasonable time interval but not prematurely, to be not unacceptably sensitive to changes in temperature, not to gel, and to have satisfactory properties, especially compressive strength, when set.

Control of flocculation and gelling can be achieved at least in part by inclusion of a dispersant in the composition but suitable dispersants tend also to have an undesirable retardant effect on setting. Moreover, components in the drilling fluid itself can have a retarding effect. The use of accelerators has therefore been considered and many compounds have been proposed for this purpose but it has proved difficult to find an accelerator which is compatible with the other components of the cement composition so that it does not adversely affect to an undesirable extent the other desired properties of the composition such as those itemised above.

We have now found that cement compositions having acceptable properties such as of pumpability and setting may be obtained by selecting the accelerator from acetic acid, and certain derivatives thereof and certain ethanolamines.

According to the present invention, there is provided a method for cementing a space in a wellbore penetrating an earth formation wherein said space in said wellbore is occupied by a drilling fluid and said method comprises the steps of:
adding cementitious material and a dispersant to a quantity of said drilling fluid to form a cement composition, and
circulating said cement composition into said wellbore characterised in that the cement composition is formed from
a major portion of the drilling fluid from the well as it was drilled;
water;
a lesser proportion of dry cementitious material;
a minor amount of a dispersant for inhibiting flocculation and gel formation, and
a compatible accelerator selected from acetic acid, acetic acid esters wherein the ester group has up to four carbon atoms, and acetamide;
and the circulation of said cement composition through said wellbore is continued until a total displacement of cement composition through said wellbore is equal to at least 100 percent to 1000 percent of the volume of said space in said wellbore.

The dispersant is preferably selected from sulfonated styrene maleic anhydride copolymers, sulfonated styrene imide copolymers, sulfonated styrene itaconic acid copolymers, sulfonated styrene acrylamide copolymers, copolymers of sulfonated styrene with one or more compounds selected from (poly) acrylates and other compounds such as partially hydrolyzed acrylamide; analogs of these sulfonated copolymers wherein the sulfonate groups are replaced by phosphonate groups, and derivatives of the copolymers which further include monomers selected from maleic anhydride, maleimide and dimethylmaleate.

The dispersant may be added in a proportion between 1.43 kg/m³ (0.5 ppb) and 28.5 kg/m³ (10.0 ppb) of the original drilling fluid and cementitious material is added to the fluid at the rate of 285 to 1711 kg/m³ (100 ppb to 600 ppb) of the original drilling fluid.

More preferably, at last two cementitious materials are added to said fluid to control the hydration rate of said cement composition, said cementitious materials being selected from Portland cement, calcium sulfate and calcium aluminate.

The invention also provides a method for cementing a space in a wellbore penetrating an earth formation additionally including the step of: displacing drilling fluid from said space with a preflush composition comprising water and a sulfonated styrene copolymer to form a rheologically compatible material for displacing said drilling fluid prior to filling said wellbore space with said cement composition.

The cement composition of the invention provides an improved slurry that effects more nearly uniform and complete displacement of the drilling fluid and tends to create good bonding between the cement and the elements in the wellbore when it is set.

### Descriptions of Preferred Embodiments

The conversion of well drilling fluids into cement slurries for purposes such as cementing casing in the wellbore into the annulus and to the subterranean formation penetrated and other cementing operations is attractive for several reasons. Specifically, a major portion of the drilling fluid is not subject to waste disposal problems and regulations and the conversion of drilling fluid to cementitious slurry minimizes both handling of the drilling fluid in the cement slurry and cement slurry preparation time and expense. Also separation between the drilling fluid and the converted cementitious slurry is not required to be maintained as cleanly as with the cement slurries per se.

The conversion of drilling "mud" to a cement slurry is not without some operational problems and undesirable compositional changes when this is done. For example, the addition of cementitious material; such as the Portland cements, lime, silica, alumina, lime and magnesia, silica, alumina and iron oxide, or calcium sulfate and the like, can substantially increase the viscosity of the fluid mixture and result in severe flocculation. Efforts to circulate such mixtures through a wellbore can result in highly unsatisfactory circulation rates, plugging of the wellbore and breakdown of the earth formation in the vicinity of the wellbore and a failure of the cement slurry to properly admix and bond. Certain dispersants have been developed for use in drilling fluids during drilling operations including lignite and lignosulfonates, which are retarders.

One dispersant which has been commercially used in drilling fluids that are to be converted is a low molecular weight styrene sulfonic acid maleic anhydride copolymer and the water soluble salt thereof. These are sometimes known as "SSMA". U.S. Patent 3,730,900 to Perricone, et al describes several drilling fluids which are treated with such a dispersant for stabilizing the rheological and fluid loss properties, particularly under high temperature in the wellbore in the presence of fluid contaminants. Other patents also disclose dispersants for drilling fluids and fluid spacer compositions. In spite of the state of the art as evidenced by these references and as known to applicants, there has remained the problem of effectively converting a drilling fluid to a suitable cement composition and displacing the drilling fluid in the borehole, including an annular space between the casing and the borehole wall, in a manner which provides effective occupancy of the area to be cemented with a composition that will form an effective bond as desired.

Moreover, although the addition of certain proportions of certain dispersants reduces the tendency for flocculation or gelation, the dispersants that have been employed heretofore have also been retarders that retard the setting time of a cement slurry.

In the aforementioned EP-A-0320288 there are shown schematic diagrams of a wellbore and fluid circulation system as well as a schematic diagram of a cement mixing and circulation system for a batch or continuous mixing of cementitious material into a drilling fluid to convert it to a cementitious slurry. This type of equipment and wellbore is so well known that it is not deemed necessary to have drawings in this application. It is sufficient to simply note that a casing is normally extended into a portion of the formation from a wellhead with a second casing extending into the formation further as a wellbore is deepened to form an annulus which may include washouts or void areas behind the casing. The casing is adapted to be in communication with a pump at the surface for circulating drilling fluid through the interior of the casing, and up the annulus to a return conduit. Drilling fluid is conducted through the return conduit to a storage tank or pit and recirculated to the pump during normal drilling operation. Conventional drilling fluid equipment includes shale shakers, sand separators and related equipment that are not usually shown anyway in the interest of simplicity.

Converting a drilling fluid to the cement composition of the invention involves introducing dry blended cementitious material into the drilling fluid, alone or with additional water, until the desired density is obtained. The water may be added to the drilling fluid before or after the addition of the cementitious material, or to the cementitious material before it is added to the fluid. Dispersant and accelerator is also added. Specifically, from zero up to 100 percent or more of water can be added to the volume of the drilling fluid to be employed. The water based drilling fluid may have a density that is normally in the range of 1-2 kg/ℓ (9 - 18 pounds per gallon (ppg)) as it is being circulated in the drilling of the well. It is desired that the density of the resultant cement composition be at least as great as that of the fluid it is to displace. After dilution with, say, from zero to fifty percent water; for example, about ten percent of the drilling fluid volume, the dispersant may be added. The dispersant should be added before or with the cementitious material. The concentration of the dispersant is preferably in the range of 0.23 - 4.5 kg (0.5 - 10 pounds) per original barrel of drilling fluid based on a 159 litres (42 gallon) barrel (hereinafter termed "ppb"), more preferably less than about 14.25 kg/m³ (5 ppb). By adding the dispersant at the time of the conversion of the drilling fluid to cement slurry surprising improvement in the mixing of this cement material into the drilling fluid has been realized.

An excellent dispersant has been shown to be the copolymer of sulfonated styrene with maleic anhydride such as a low weight styrene sulfonic acid-maleic anhydride copolymer commercially available under the tradename NARLEX D-72 from National Starch and Chemical Corporation, Bridgewater, New Jersey. The dispersant may be preblended with the dry cementitious material and other additives, if desired, and stored, or it may be added to the drilling fluid during the addition of the diluting water. Moreover, the dispersant may also comprise selected quantities of sulfonated styrene acrylamide copolymer, sulfonated styrene imide copolymer, sulfonated styrene itaconic acid copolymer or a copolymer of sulfonated styrene with one or more compounds selected from (poly)acrylates and other compounds such as partially hydrolyzed acrylamide. Also, analogs where the sulfonate groups are replaced by phosphonate groups may be used. The groups may be present as potassium salts as well as the usual sodium salts. Moreover, it is contemplated that monomers such as maleic anhydride, maleimide and dimethylmaleate may be included in the selected copolymers mentioned above.

The accelerator is preferably added in an amount from 2.85 - 28.5 kg/m³ (1 - 10 ppb), more preferably about 8.55 -14.25 kg/m³ (3 - 5 ppb) to get the desired set to the cement in the desired time interval. Specifically, instead of having to wait for 30 to 40 hours for the cement slurry to set up, it can be set within 24 hours or less using the accelerator.

The accelerator is selected from acetic acid; methylacetate, ethylacetate, the propyl acetates, both normal propyl and isopropyl; and the butyl acetates; including the normal butyl, isobutyl and tertiary butyl acetates. These small molecule acetates hydrolyze in the presence of water at relatively elevated pH in the range of 8 - 12, to give satisfactory acceleration of the set. It is theorized that when an acetate ester is used, acetic acid is formed by hydrolysis and then reacts on a minor scale with surrounding constituents to accelerate set of the cement. Regardless of whether the theory is correct or not, it is a fact that these esters and acetamide can effect acceleration of the set of the cement; as can also monoethanolamine and diethanolamine.

Concurrently with or following the addition of the diluting water with or without the dispersant and/or the accelerator to the drilling fluid, a cement such as Portland cement is added, preferably in the range of about 285 to 1711 kg/m³ (100 ppb to 600 ppb). A hydration rate controller, such as calcium sulfate, can be used in the range of 28.5 to 285 kg/m³ (10 ppb to 100 ppb) of drilling fluid if desired. Fluid loss control compositions such as inorganic salts, calcium aluminate, lignosulfonates with or without organic acids and polymers such as HEC, CMHEC, AMPS and acrylic acids may be premixed with the other materials or with a resulting cement slurry.

The above-described composition may be further modified by the addition of silicas, such as silica flour, in the amount of up to 100 percent by weight of the Portland cement fraction of the cement slurry to increase the high temperature stability thereof. Also, other cementing mediums such as magnesium salt, calcium aluminate, and the above mentioned calcium sulfate can be added to control slurry thickening time, change the development rate and total compressive strength, as well as to obtain any other desired properties.

The Portland cement may be any of the usual types of cementing materials such as described in US-A-4953620. A cement material of the type described in U.S. Patent 3,499,491 is commercially available under the name "C-Mix" and can be employed if desired for use in conversion drilling fluids to cement slurries but in this invention, however, the usual abnormally high gelation of the drilling fluid can be controlled by the dispersant and the set of the cement can be accelerated by use of the accelerator. In pursuing the present invention it was decided to test the cement's composition with the addition of the dispersant and accelerator additive in a water based lignosulfonate drilling fluid having a density of approximately 1.4 kg/ℓ (12.3 ppg). Employing a formulation such as described in the Example of US-A-4953620 but replacing the formamide with one of the accelerators specified herein, a satisfactory cement was obtained.

The cement slurry composition was tested and found to have properties that indicate that it could be pumped at a satisfactory circulation rate.

Comparative tests with conventional type accelerators showed they could not be employed in this application.

By means of the present invention, an improved cement composition and process has been provided for cementing oil and gas wells and subterranean formation voids or spaces requiring the displacement of a drilling fluid and the emplacement of a cementing material having requisite bonding and strength. Recirculation of the cement slurry may be carried out to assure complete displacement of the drilling fluid with a material which sets to provide the requisite compressive strength when desired. In preliminary testing, drilling fluid converted to cement according to the present invention using class A cement in proportions of approximately 113 kg (250 pounds) of cement per barrel of the original drilling fluid with a dispersant and accelerator as indicated in the concentration ranges indicated above has shown a viscosity reduction, anti-flocculation characteristics and satisfactory set in an acceptable time interval.

Other additives that may be incorporated include hydration rate controllers, fluid loss control materials, components such as silicas to improve high temperature stability, and components such as calcium sulfate to control slurry thickening time, change the development rate and/or the total compressive strength.

The overall process of cementing a space in a wellbore according to the present invention may also include the displacement of a drilling fluid with a preflushing medium which will further assure that the displacement or removal of the drilling fluid and the bonding of the cement to adjacent structures is enhanced. For example, it is contemplated that the drilling fluid may be displaced from the wellbore by pumping a preflush medium comprising water and other suitable dispersants with or without anionic or nonionic wetting surfactants and with or without viscosifying material such as HEC, CMHEC, PHPA, bentonite, attapulgite, sepiolite and sodium Silicate with or without certain weighting material such as barite, hematite, illmenite and/or sand. It is acceptable to form a rheologically compatible medium for displacing the drilling fluid which is then itself displaced by the cement composition of the invention.

There is provided an improved well composition and process for cementing using the drilling fluid or a major portion thereof which has been converted to cement composition by addition of one or more cementitious materials, dispersant and accelerator as indicated. The recirculating of the drilling fluid-to-cement conversion composition through the well bore to completely displace or convert the drilling fluid is within the scope of this invention.

A preferred embodiment of the method involves producing cement composition of batch process until all of the drilling fluid required for the cementing operation has been converted. Alternatively, the materials added to the drilling fluid to convert it to cement may be continuously added in a stream of drilling fluid as it is circulated in the wellbore. The process of recirculating the drilling fluid converted to cement in a volume range of from 10 percent to 1000 percent of the displacement volume of the wellbore space provides substantial assurance that all the drilling fluid has been displaced from the wellbore and that washouts, voids or other imperfections in the cement jacket or annulus are minimized.

A desirable cement composition in accordance with this invention is one that permits complete circulation of the fluid out of the wellbore and replacement with the cement composition itself. Since this circulation may normally comprise two to as many as ten complete displacements of the system volume which includes the wellbore, the mixing tanks or pits and all the interconnecting conduits, it is desirable that the composition not commence thickening or setting until circulation is complete. It has been found that this can be controlled with the accelerators of this invention whereas other accelerators are too strong, or act too rapidly.

Having thus described the invention, it will be understood that such description has been given by way of illustration example and not by way of limitation, reference for the latter purpose being had top the appended claims.

## Claims

1. A method for cementing a space in a wellbore penetrating an earth formation wherein said space in said wellbore is occupied by a drilling fluid and said method comprises the steps of:
adding cementitious material and a dispersant to a quantity of said drilling fluid to form a cement composition, and
circulating said cement composition into said wellbore characterised in that the cement composition is formed from
a major portion of the drilling fluid from the well as it was drilled;
water;
a lesser proportion of dry cementitious material;
a minor amount of a dispersant for inhibiting flocculation and gel formation, and
a compatible accelerator selected from acetic acid, acetic acid esters wherein the ester group has up to four carbon atoms, and acetamide;
and the circulation of said cement composition through said wellbore is continued until a total displacement of cement composition through said wellbore is equal to at least 100 percent to 1000 percent of the volume of said space in said wellbore.

2. A method as claimed in claim 1 wherein said dispersant is selected from sulfonated styrene maleic anhydride copolymers, sulfonated styrene imide copolymers, sulfonated styrene itaconic acid copolymers, sulfonated styrene acrylamide copolymers, copolymers of sulfonated styrene with one or more compounds selected from (poly) acrylates and other compounds such as partially hydrolyzed acrylamide; analogs of these sulfonated copolymers wherein the sulfonate groups are replaced by phosphonate groups, and derivatives of the copolymers which further include monomers selected from maleic anhydride, maleimide and dimethylmaleate.

3. A method as claimed in claim 1 or claim 2 wherein said dispersant is added in a proportion between 1.43 kg/m³ (0.5 ppb) and 28.5 kg/m³ (10.0 ppb) of the original drilling fluid and cementitious material is added to the fluid at the rate of 285 to 1711 kg/m³ (100 ppb to 600 ppb) of original drilling fluid.

4. A method as claimed in any one of claims 1 to 3 characterised in that at least two cementitious materials are added to said fluid to control the hydration rate of said cement composition, said cementitious materials being selected from Portland cement, calcium sulfate and calcium aluminate.

5. A method as claimed in any one of claims 1 to 4 also including the step of:
displacing drilling fluid from said space with a pre-flush composition comprising water and a sulfonated styrene copolymer to form a rheologically compatible material for displacing said drilling fluid prior to filling said wellbore space with said cement composition.

## Patentansprüche

1. Verfahren zum Zementieren eines mit Bohrflüssigkeit gefüllten Hohlraums in einem die Erdformation durchdringenden Bohrloch, das folgende Schritte umfaßt:
Zusatz eines zementartigen Materials und eines Dispergiermittels zu einer Menge der Bohrflüssigkeit, um eine Zementzusammensetzung zu bilden, und
Zirkulieren der Zementzusammensetzung in das Bohrloch,
dadurch gekennzeichnet, daß
die Zementzusammensetzung aus einem größeren Anteil der beim Bohren des Bohrlochs anfallenden Bohrflüssigkeit, Wasser, einem kleineren Anteil trockenen zementartigen Materials, einem kleineren Anteil eines Dispergiermittels zur Hemmung von Ausflockungen und Gelbildung und einem kompatiblen, aus Essigsäure, Essigsäureestern, in denen die Estergruppe bis zu vier Kohlenstoffatome aufweist, und Acetamid ausgewählten Beschleuniger besteht
und die Zirkulation der Zementzusammensetzung durch das Bohrloch fortgesetzt wird, bis die Gesamtverdrängung der Zementzusammensetzung durch das Bohrloch mindestens 100 bis 1000 % des Volumens des Hohlraums im Bohrloch entspricht.

2. Verfahren nach Anspruch 1, bei dem das Dispergiermittel aus sulfonierten Styrolmaleinsäureanhydrid-Copolymeren, sulfonierten Styrolimid-Copolymeren, sulfonierten Styrolitaconsäure-Copolymeren, sulfonierten Acrylamid-Copolymeren, Copolymeren aus sulfoniertem Styrol mit einer oder mehreren aus (Poly)acrylaten und anderen Verbindungen wie teilweise hydrolysiertem Acrylamid ausgewählten Verbindungen; Analogen dieser sulfonierten Copolymere, in denen die Sulfonatgruppen durch Phosphonatgruppen ersetzt werden, sowie Derivaten der Copolymere, die außerdem aus Maleinsäureanhydrid, Maleinimid und Dimethylmaleat ausgewählte Monomere umfassen, ausgewählt wird.

3. Verfahren nach Anspruch 1 oder 2, bei dem das Dispergiermittel in einem Verhältnis zwischen 1,43 kg/m³ (0,5 ppb) und 28,5 kg/m³ (10,0 ppb) der ursprüngliche Bohrflüssigkeit zugesetzt wird und zementartiges Material der Flüssigkeit mit einer Geschwindigkeit von 285 bis 1711 kg/m³ (100 ppb bis 600 ppb) der ursprünglichen Bohrflüssigkeit zugesetzt wird.

4. Verfahren nach einem der Ansprüche 1 bis 3, dadurch gekennzeichnet, daß der Flüssigkeit mindestens zwei zementartige Materialien zugesetzt werden, um die Hydratisierungsgeschwindigkeit der Zementzusammensetzung zu steuern, wobei die zementartigen Materialien aus Portland-Zement, Calciumsulfat und Calciumaluminat ausgewählt sind.

5. Verfahren nach einem der Ansprüche 1 bis 4, das außerdem folgenden Schritt umfaßt:
Verdrängen von Bohrflüssigkeit aus dem Hohlraum mit einer Vorspülzusammensetzung, die Wasser und ein sulfoniertes Styrolcopolymer umfaßt, um ein rheologisch kompatibles Material zur Verdrängung der Bohrflüssigkeit zu bilden, ehe der Bohrlochhohlraum mit der Zementzusammensetzung gefüllt wird.

## Revendications

1. Procédé pour cimenter un espace dans un puits de forage pénétrant dans une formation de terrain dans lequel cet espace dans ce puits de forage est occupé par un fluide de forage et ce procédé comprend les étapes :
d'addition d'un matériau cimenteux et d'un dispersant à une quantité de ce fluide de forage pour former une composition de ciment, et
de circulation de cette composition de ciment dans ce puits de forage,
caractérisé en ce que la composition de ciment est formée à partir
d'une quantité majeure du fluide de forage provenant du puits au fur et à mesure qu'il est foré;
d'eau;
d'une proportion inférieure de matériau cimenteux sec;
d'une quantité mineure d'un dispersant pour inhiber la floculation et la gélification, et
d'un accélérateur compatible choisi parmi l'acide acétique, des esters d'acide acétique dans lesquels le groupe ester a jusqu'à quatre atomes de carbone, et l'acétamide;
et que la circulation de cette composition de ciment à travers ce puits de forage est poursuivie jusqu'à obtention d'un déplacement total de la composition de ciment à travers ce puits de forage qui est égal à au moins 100% à 1000% du volume de cet espace dans ce puits de forage.

2. Procédé suivant la revendication 1, dans lequel ce dispersant est choisi parmi des copolymères d'anhydride maléique et de styrène sulfoné, des copolymères d'imide et de styrène sulfoné, des copolymère d'acide itaconique et de styrène sulfoné, des copolymères d'acrylamide et de styrène sulfoné, des copolymères de styrène sulfoné avec un ou plusieurs composés choisis parmi des polyacrylates et d'autres composés comme un acrylamide partiellement hydrolysé; des analogues de ces copolymères sulfonés dans lesquels les groupes sulfonates sont remplacés par des groupes phosphonates, et des dérivés des copolymères qui comprennent de plus des monomères choisis parmi l'anhydride maléique, le maléimide et le maléate de diméthyle.

3. Procédé suivant les revendications 1 ou 2, dans lequel ce dispersant est ajouté en une proportion comprise entre 1,43 et 28,5 kg/m³ (0,5 ppb et 10,0 ppb) de fluide de forage d'origine et ce matériau cimenteux est ajouté au fluide à raison de 285 à 1711 kg/m³ (100 ppb à 600 ppb) de fluide de forage d'origine.

4. Procédé suivant l'une quelconque des revendications 1 à 3, caractérisé en ce qu'au moins deux matériaux cimenteux sont ajoutés à ce fluide pour contrôler le taux d'hydratation de cette composition de ciment, ces matériaux cimenteux étant choisis parmi un ciment Portland, du sulfate de calcium et de l'aluminate de calcium.

5. Procédé suivant l'une quelconque des revendications 1 à 4, incluant aussi l'étape de :
déplacement du fluide de forage à partir de cet espace avec une composition de prénettoyage comprenant de l'eau et un copolymère de styrène sulfoné pour former un matériau compatible du point de vue rhéologique pour le déplacement de ce fluide de forage avant remplissage de cet espace de puits de forage avec cette composition de ciment.
